(19) Europäisches Patentamt
European Patent Office
Office européen des brevets

(11) **EP 3 647 618 B1**

(12) **EUROPÄISCHE PATENTSCHRIFT**

(45) Veröffentlichungstag und Bekanntmachung des Hinweises auf die Patenterteilung:
**19.05.2021   Patentblatt 2021/20**

(51) Int Cl.:
*F16D 3/00* *(2006.01)*     *F16D 3/12* *(2006.01)*
*F16D 3/52* *(2006.01)*     *F16D 3/56* *(2006.01)*
*F16D 3/60* *(2006.01)*     *F16D 3/62* *(2006.01)*
*F16D 3/79* *(2006.01)*     *F16D 3/78* *(2006.01)*

(21) Anmeldenummer: **18204362.0**

(22) Anmeldetag: **05.11.2018**

(54) **VERBESSERTE LAMELLENANBINDUNG FÜR EINE LAMELLENKUPPLUNG UND INDUSTRIE-APPLIKATION**

IMPROVED LAMELLAE CONNECTION FOR A LAMELLAR COUPLING AND INDUSTRIAL APPLICATION

RACCORDEMENT À LAMELLES AMÉLIORÉ POUR UN EMBRAYAGE À LAMELLES ET APPLICATION INDUSTRIELLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**06.05.2020   Patentblatt 2020/19**

(73) Patentinhaber: **Flender GmbH**
**46395 Bocholt (DE)**

(72) Erfinder: **Kleinewegen, Stefan**
**46395 Bocholt (DE)**

(74) Vertreter: **Maier, Daniel Oliver**
**Siemens AG**
**Postfach 22 16 34**
**80506 München (DE)**

(56) Entgegenhaltungen:
**GB-A- 2 222 865     JP-B2- 3 755 983**
**JP-U- S6 145 629     US-A- 2 928 264**

**Beschreibung**

Die Erfindung betrifft eine Lamellenkupplung, die über eine verbesserte Lamellenanbindung verfügt. Die Erfindung betrifft auch eine Industrie-Applikation, in der eine entsprechende Lamellenkupplung eingesetzt wird.

Die Europäische Patentanmeldung EP 3 521 648 A1 offenbart eine Lamellenkupplung, in der eine Lamelle an einer Lamellenbohrung mit einem ersten Flansch über eine Schraube verspannt. An der Lamelle ist ein Abstandselement vorgesehen, das zu einem Abstützen einer Axialbewegung des zweiten Flanschs ausgebildet ist.

Die Offenlegungsschrift GB 2 222 865 A offenbart eine Lamellenkupplung, die an einem Schwungrad angeordnet ist, das mit einem Verbrennungsmotor verbunden ist. Durch die Lamellenkupplung verbindet das Schwungrad mit einem Drehmomentwandler. Auf der Lamellenkupplung ist eine Schweißmutter angeschweißt, in der eine Befestigungsmittel lösbar aufgenommen ist.

Aus JP 3 755983 B2 ist eine Lamellenkupplung bekannt, die zwei gegenüberliegende Flansche miteinander verbindet. Die Lamellenkupplung weist ein Lamellenpaket auf, das über eine Kragenbuchse mit einem Innengewinde, einen Ring und eine Schraube mit einem der Flansche verbunden ist. Die Buchse mit Innengewinde ist mit dem Lamellenpaket punktverschweißt.

Das Dokument EP 1 347 183 A1 offenbart eine Schweißmutter, die über symmetrisch angeordnete Abschnitte verfügt, an denen die Schweißmutter stoffschlüssig mit einer ebenen Unterlage verbindbar ist. Derartige Schweißmuttern sind im Fahrzeugbau einsetzbar.

In einer Vielzahl an technischen Anwendungen, in denen Antriebsleistung von einer Welle auf eine andere Welle zu übertragen ist, besteht Bedarf an leistungsfähigen Kupplungen, die kompakte Abmessungen aufweisen. Darüber hinaus wird angestrebt, dass eine entsprechende Kupplung einfach, schnell und kosteneffizient herzustellen sein soll. Ebenso wird für eine entsprechende Kupplung eine hohe Lebensdauer angestrebt. Der Erfindung liegt die Aufgabenstellung zugrunde, eine Kupplung bereitzustellen, die in zumindest einem der skizzierten Punkte eine Verbesserung bietet und in einer Vielzahl an Anwendungsgebieten, insbesondere verschiedenen Industrie-Applikationen, einsetzbar ist.

Die Aufgabenstellung wird durch eine erfindungsgemäße Lamellenkupplung gelöst. Die Lamellenkupplung umfasst einen ersten und einen zweiten Flansch, die über eine Lamelle miteinander verbunden sind. Die Verbindung zwischen dem ersten und zweiten Flansch über die Lamelle ist drehmomentübertragend, so dass Wellenleistung vom ersten auf den zweiten Flansch oder umgekehrt übertragbar ist. Dabei ist die Lamelle mit dem ersten Flansch über ein erstes Befestigungsmittel lösbar verbunden, das zu einem Übertragen einer Zugkraft ausgebildet ist. Das erste Befestigungsmittel wirkt mit einem zweiten Befestigungsmittel zusammen, so dass beispielsweise die Zugkraft durch die Lamelle auf das zweite Befestigungsmittel übertragbar ist, und darüber auf das erste Befestigungsmittel. Das erste und zweite Befestigungsmittel bilden zusammen eine lösbare Verbindung aus, die ein zerstörungsfreies Trennen des ersten und zweiten Befestigungsmittels erlaubt. Erfindungsgemäß ist das zweite Befestigungsmittel über eine stoffschlüssige Verbindung mit der Lamelle verbunden. Die stoffschlüssige Verbindung kann dabei punktuell oder um das zweite Befestigungsmittel umlaufend ausgebildet sein. Die Einleitung einer Zugkraft und/oder einer Querkraft vom ersten Befestigungsmittel über das zweite Befestigungsmittel in die Lamelle erfordert damit keine weitergehenden Anpassungen der Lamelle. Insbesondere sind Einkerbungen, Ausnehmungen und andere Materialrücknahmen an der Lamelle entbehrlich, die beispielsweise zur Bereitstellung eines Formschlusses oder eines Reibschlusses notwendig sind. Stattdessen ist das zweite Befestigungsmittel selbst dazu ausgebildet, eine Zugkraft und/oder Querkraft in die Lamelle einzuleiten. Derartige Beanspruchungen sind beispielsweise durch eine Drehbewegung des ersten Flansches relativ zum zweiten Flansch, oder durch einen Axialversatz oder Radialversatz zwischen dem ersten und zweiten Flansch hervorrufbar. Somit ist die Lamelle erfindungsgemäß einfacher konstruierbar und kann dazu beispielsweise entlang ihres gesamten Umfangs einen unverzweigten Querschnitt aufweisen. Dies erlaubt eine stärkere Ausnutzung des für die Lamelle eingesetzten Materials, und damit eine gewichtsparende und platzsparende Bauform der Lamelle selbst. Ebenso ist durch die verbesserte Materialausnutzung auch eine erhöhte Lebensdauer der Lamelle erreichbar. Dadurch, dass die Lamelle einer Lamellenkupplung die Größe, insbesondere den jeweiligen Durchmesser, des ersten und zweiten Flansches bestimmt, ist es möglich, die erfindungsgemäße Lamellenkupplung in puncto Außendurchmesser kompakt auszubilden.

Erfindungsgemäß ist die Lamelle zumindest im Bereich des zweiten Befestigungsmittels ausnehmungsfrei ausgebildet. Darunter ist zu verstehen, dass in der Lamelle unmittelbar am zweiten Befestigungsmittel oder in dessen Umgebung keine Bohrungen, Einkerbungen oder Einschnürungen des Querschnitts der Lamelle vorliegen. Dadurch, dass im Bereich des zweiten Befestigungsmittels insbesondere keine Bohrung ausgebildet ist, weist die Lamelle dort einen unverzweigten Querschnitt auf. Beispielsweise liegen an Bohrungen oder Einschnürungen Formzahlen und/oder Kerbwirkungszahlen vor, die größer als Eins sind. Die beanspruchte Lösung erlaubt es, durch entsprechende Gestaltung der Lamelle und/oder der Anbindung des Befestigungsmittels die Formzahl und/oder die Kerbwirkungszahl an der entsprechenden Stelle gezielt zu reduzieren. Ebenso werden abträgliche Effekte infolge einer Lochleibung vermieden. Die beanspruchte Lamellenkupplung erlaubt es, derartige Aspekte bei der Auslegung der Lamelle zu vernachlässigen und so die Lamelle kompakter zu konstruieren. Dies wiederum erlaubt es, die Lamellenkupplung platzsparender zu bauen.

In einer weiteren Ausführungsform der beanspruchten Lamellenkupplung kann das erste Befestigungsmittel als Schraube, als Bolzen, Gewindebolzen, oder als Passschraube ausgebildet sein. Derartige Ausführungsformen des ersten Befestigungsmittels sind dazu geeignet, eine Zugkraft, eine Druckkraft, und/oder eine Querkraft aufzunehmen und sind zerstörungsfrei vom ersten Flansch und/oder der Lamelle lösbar. Unter dem ersten Befestigungsmittel ist auch jegliches andere Konstruktionselement zu verstehen, das eine entsprechende lösbare Verbindung zwischen der Lamelle und dem ersten Flansch erlaubt. Alternativ oder ergänzend kann das zweite Befestigungsmittel als Mutter oder als Schweißmutter ausgebildet sein. Eine Mutter oder Schweißmutter stellt ein zweites Befestigungsmittel dar, das komplementär zum ersten Befestigungsmittel ausgebildet ist und vom ersten Befestigungsmittel zerstörungsfrei lösbar ist. Ferner sind Muttern und Schweißmuttern in einfacher Weise stoffschlüssig an einer Lamelle anbringbar. Unter einem zweiten Befestigungsmittel ist auch jegliches Konstruktionselement zu verstehen, das komplementär zum ersten Befestigungsmittel wirkt, von diesem lösbar ausgebildet ist und mit der Lamelle stoffschlüssig verbindbar ist. Derartige erste und zweite Befestigungsmittel sind in einer breiten Spanne an Abmessungen und Gütekategorien einfach verfügbar und sind damit einfach an die Erfordernisse einer Lamellenkupplung konstruktiv anpassbar. Ferner bieten die skizzierten ersten und zweiten Befestigungsmittel in einfacher Weise eine mechanisch beanspruchbare Verbindung, die zur Übertragung einer Zugkraft, einer Druckkraft und/oder einer Querkraft geeignet ist.

Des Weiteren kann in der Lamellenkupplung die stoffschlüssige Verbindung zwischen der Lamelle und dem zweiten Befestigungsmittel als eine Schweißverbindung, eine Lötverbindung, eine Hartlötverbindung, oder als Klebverbindung ausgebildet sein. Des Weiteren sind auch Kombinationen entsprechender stoffschlüssiger Verbindungen möglich. Schweißverbindungen, Lötverbindungen und Hartlötverbindungen bieten ein hohes Maß an Festigkeit, wenn die Lamelle und/oder das zweite Befestigungsmittel zumindest abschnittsweise aus einem metallischen Werkstoff hergestellt sind. Eine Schweißverbindung bietet hierbei eine erhöhte Festigkeit. Eine Lötverbindung oder Hartlötverbindung wiederum wird mit geringeren Prozesstemperaturen hergestellt als eine Schweißverbindung, so dass Gefügeänderungen in der Lamelle reduziert werden. Klebverbindungen wiederum sind in besonders einfacher und wirtschaftlicher Weise herstellbar und bieten die niedrigsten Prozesstemperaturen. Solche stoffschlüssige Verbindungen sind mit hoher Qualität und Prozesssicherheit herstellbar und sind einfach in einen industriellen Fertigungsprozess integrierbar. Damit kann die beanspruchte Lamellenkupplung in einfacher Weise hergestellt werden. Die beanspruchte Lamellenkupplung ist somit bei einer Vielzahl an Werkstoffen und Werkstoffkombinationen herstellbar und somit für unterschiedliche Einsatzzwecke anpassbar.

Darüber hinaus kann die stoffschlüssige Verbindung zwischen der Lamelle und dem zweiten Befestigungsmittel durch Elektronenstrahlschweißen oder Laserschweißen hergestellt sein. Insbesondere beim Elektronenstrahlschweißen liegt ein reduzierter Wärmeeintrag in die Lamelle vor. Die Lamelle kann beispielsweise aus einem Federstahl hergestellt sein, dessen Elastizität durch übermäßigen Wärmeeintrag herabgesetzt werden kann. Bei einer stoffschlüssigen Verbindung zwischen der Lamelle und dem zweiten Befestigungsmittel, die durch Elektronenstrahlschweißen hergestellt ist, werden die Materialeigenschaften des Werkstoffs der Lamelle bewahrt. Die Lamelle ist folglich weiterhin aus Werkstoffen herstellbar, die durch Wärmeeintrag degradierbar sind. Ein Wechsel zu einem kostenintensiven und anspruchsvoller zu verarbeitenden Werkstoff für die Lamelle ist damit vermeidbar. Darüber hinaus ist ein Elektronenstrahlschweißen schnell durchführbar, was die Herstellung der beanspruchten Lamellenkupplung vereinfacht. Alternativ oder ergänzend kann die stoffschlüssige Verbindung auch durch ein Widerstandspunktschweißen hergestellt werden. Ein Widerstandspunktschweißen bietet eine erhöhte Energieeffizienz, einen geringen Bauteilverzug und kommt ohne zusätzliche Materialien aus.

In einer weiteren Ausführungsform ist der zweite Flansch über ein erstes Befestigungsmittel mit der Lamelle lösbar verbunden. Dieses erste Befestigungsmittel wiederum ist lösbar mit einem zweiten Befestigungsmittel verbunden, das durch eine stoffschlüssige Verbindung mit der Lamelle verbunden ist. Dadurch wird die Verbindung zwischen dem ersten Flansch über das erste und zweite Befestigungsmittel mit der Lamelle auf den zweiten Flansch übertragen. Hierdurch ist insbesondere eine durchgehende Anwendung des Prinzips der beanspruchten Lösung in einer Lamellenkupplung möglich. Des Weiteren kann ein Abstand zwischen zwei benachbarten zweiten Befestigungsmitteln, die an entgegengesetzten Seiten der Lamelle angebracht sind, im Wesentlichen einer freien Lamellenlänge entsprechen. Unter einer freien Lamellenlänge ist, entlang einer Umfangsrichtung der Lamelle betrachtet, der Abschnitt der Lamelle zu verstehen, der dazu geeignet ist, bei einer Torsionsbeanspruchung der Lamellenkupplung in Umfangrichtung Zugkräfte und dabei, durch Wellenversatz erzwungene Rückstellkräfte, biegeweich zu übertragen. Der Wellenversatz führt dabei zu einer axialen Verlagerung des ersten und zweiten Flansches bzw. zu einer Neigung der Flansche zueinander. Unter Torsionsbeanspruchung der Lamellenkupplung bei gleichzeitiger Verlagerung liegt eine im Wesentlichen S-förmige Verformung der Lamelle zwischen zwei benachbarten zweiten Befestigungsmitteln vor. Je länger die freie Lamellenlänge ist, umso höhere Torsionsbeanspruchungen bei Versatz kann die Lamelle aufnehmen. Ferner bestimmt die freie Lamellenlänge die Verlagerungsfähigkeit der Lamellenkupplung, also die Fähigkeit, Axialversätze und/oder Radialversätze zwischen dem ersten und zweiten Flansch aufzunehmen. Auch die Fähigkeit zum Aufnehmen von Winkelversätzen zwischen dem ersten und zweiten Flansch gehört zur Versatzfähigkeit. Je höher die Versatzfähigkeit der Lamellenkupplung ist, umso robuster ist sie im Betrieb und für entsprechend hochbeanspruchende Anwendungen geeignet. Insbesondere erlaubt die beanspruchte Lösung einen bestimmungsgemäßen dauerhaften Betrieb, bei dem ein Nenndrehmoment vorliegt und gleichzeitig eine Winkelversatz von bis zu 1° und gleichzeitig ein Axialversatz zwischen dem ersten und zweiten Flansch von bis zu 2 mm. Die stoffschlüssigen Verbindungen zwischen den zweiten Befestigungsmitteln und der Lamelle sind jeweils kompakt ausgebildet, so dass die freie Lamellenlänge gegenüber bekannten, also nicht erfindungsgemäßen, gleich dimensionierten Lamellenkupplungen erhöht ist.

Bei der beanspruchten Lamellenkupplung kann auch zwischen dem zweiten Befestigungsmittel und der Lamelle ein Distanzelement angeordnet werden. Die stoffschlüssige Verbindung ist dabei zwischen der Lamelle und dem Distanzelement ausgebildet. Das Distanzelement ist hierbei wiederum mit dem zweiten Befestigungselement verbunden. Die Verbindung zwischen dem Distanzelement und dem zweiten Befestigungselement kann dabei lösbar oder unlösbar ausgebildet sein, beispielsweise als stoffschlüssige Verbindung. Das Distanzelement kann als Scheibe, Buchse, Hülse, Unterlegscheibe, oder als Unterlegscheibenstapel ausgebildet sein. Infolgedessen sind die Distanzelemente als robuste Konstruktionselemente ausgebildet. Das zugehörige zweite Befestigungsmittel ist damit sicher vom Distanzelement trennbar und durch ein entsprechendes Ersatzteil, also ein neues zweites Befestigungsmittel, ersetzbar. Insbesondere kann bei einer solchen Reparatur ein Wärmeeintrag in die Lamelle minimiert oder verhindert werden. Dies erlaubt insgesamt eine einfache und schnelle Reparatur der beanspruchten Lamellenkupplung. Darüber hinaus ist das Distanzelement dazu geeignet, eine Länge des ersten und/oder zweiten Befestigungsmittels zu bestimmen. Des Weiteren ist ein derartiges Distanzelement in einem separaten Fertigungsschritt präzise positionierbar. Die daraus resultierende hohe Maßhaltigkeit erlaubt es, die technischen Vorteile der beanspruchten Lamellenkupplung in erhöhtem Maß zu erzielen.

Alternativ kann die stoffschlüssige Verbindung unmittelbar zwischen der Lamelle und dem zweiten Befestigungsmittel ausgebildet sein. Insbesondere kann eine solche unmittelbare Verbindung als eine stoffschlüssige Verbindung, beispielsweise als Schweißverbindung, ausgebildet sein. Dadurch wird die Anzahl an Komponenten und Fertigungsschritten reduziert und die Herstellung der Lamellenkupplung vereinfacht.

In einer weiteren Ausführungsform der Lamellenkupplung weist diese eine flächenspezifische Leistungsdichte von 100 MW/m² bis 400 MW/m², bevorzugt 150 MW/m² bis 350 MW/m², besonders bevorzugt von 160 MW/m² bis 280 MW/m² auf.

Die flächenspezifische Leistungsdichte ist dabei das Verhältnis zwischen der zulässigen Nennleistung der Lamellenkupplung und der radialen Gesamtquerschnittsfläche der Kupplung, also der Oberfläche der Lamelle im Querschnitt. Die Oberfläche der Lamelle wird dabei nur auf einer Seite berücksichtigt. Die flächenspezifische Leistungsdichte wird formelmäßig definiert durch:

$$\Phi = \frac{M \times \omega}{(da^2 - di^2) \times \pi \times 1/4}$$

mit

$\Phi$:= flächenspezifische Leistungsdichte
M:= Nenndrehmoment
$\omega$:= Nenndrehzahl
da:= Außendurchmesser der Lamelle
di:= Innendurchmesser der Lamelle

Die beanspruchte Lösung bietet gegenüber den Lösungen aus dem Stand der Technik eine gesteigerte flächenspezifische Leistungsdichte. Damit ist die beanspruchte Lamellenkupplung auch in Anwendungen einsetzbar, bei denen hohe Anforderungen an die Beanspruchbarkeit einer Kupplung gestellt werden und gleichzeitig geringe Abmessungen erforderlich sind.

Darüber hinaus kann bei der beanspruchten Lamellenkupplung das erste Befestigungsmittel, das am ersten und/oder zweiten Flansch aufgenommen ist, zum Aufnehmen einer Querkraft ausgebildet sein. Neben dem Übertragen einer Zugkraft wird dadurch im Betrieb ein Verformen des ersten Befestigungsmittels entlang einer Umfangsrichtung reduziert oder minimiert. Dadurch wird die Lamelle im Wesentlichen entlang einer Umfangsrichtung beansprucht. Je höher die Verformung des erstens Befestigungsmittels ist, umso stärker ist die S-förmige Verformung der Lamelle zwischen zwei zweiten Befestigungsmitteln, die an unterschiedlichen Seite der Lamelle angebracht sind. Je geringer die S-förmige Verformung ist, umso geringer ist in einem entsprechend gebogenen Abschnitt der Lamelle die mechanische Beanspruchung, was wiederum zu einer erhöhten Lebensdauer der Lamelle führt.

In einer weiteren Ausführungsform der beanspruchten Lamellenkupplung weist die Lamelle eine maximale Radialbreite auf, die dem 1,0-fachen bis 1,8-fachen, bevorzugt dem 1,0-fachen bis 1,5-fachen, besonders bevorzugt dem 1,0-fachen bis 1,2-fachen einer minimalen Radialbreite der Lamelle entspricht. Unter der Radialbreite ist, entlang einer Axialrichtung bezogen auf eine Drehachse der Lamellenkupplung betrachtet, eine Breite einer umlaufenden Oberfläche auf einer Seite der Lamelle zu verstehen, die dem ersten oder zweiten Flansch zugewandt ist. Die Lamelle weist dementsprechend eine im Wesentlichen konstante Radialbreite auf, die im bestimmungsgemäßen Betrieb zwischen zwei benachbarten zweiten Befestigungsmitteln in Umfangsrichtung im Wesentlichen einer Zugbeanspruchung unterworfen ist. Die Lamelle ist dabei zumindest jeweils im Bereich eines zweiten Befestigungsmittels frei von Ausnehmungen oder Bohrungen ausgebildet, so dass lokale Erhöhungen der Radialbreite entbehrlich sind. Folglich weist die Lamelle in der beanspruchten Lamellenkupplung einen reduzierten Außendurchmesser auf.

Des Weiteren kann die Lamelle in der beanspruchten Lamellenkupplung durchgängig eine im Wesentlichen durchgängig konstante Dicke aufweisen. Die Lamelle ist in der beanspruchten Lamellenkupplung im Wesentlichen streifenförmig ausbildbar. Dies ist einfacher und wirtschaftlicher in der Herstellung als eine Lamelle, die über lokale Aufdickungen verfügt. Die Lamelle ist beispielsweise aus einem Blech ausstanzbar und kann weitestgehend automatisch hergestellt werden. Das Gleiche gilt analog auch für Lamellen, die entsprechend schichtweise miteinander verbundene Lamellenblätter aufweisen. Auch hierdurch wird die Wirtschaftlichkeit der beanspruchten Lamellenkupplung weiter erhöht.

In einer weiteren Ausführungsform der beanspruchten Lamellenkupplung liegt zwischen zwei, in Umfangsrichtung betrachtet, benachbarten zweiten Befestigungsmitteln ein zuglasttragender Abschnitt vor. In einen derartigen Abschnitt wird im Betrieb die Zugbeanspruchungen eingeleitet, die durch das zu übertragende Drehmoment in der Lamelle hervorgerufen werden. Der zuglasttragende Abschnitt entspricht zumindest teilweise in Umfangsrichtung dem Teil der Lamelle, der sich zwischen den zweiten Befestigungsmitteln, die auf unterschiedlichen Seiten der Lamelle angebracht sein können, befindet. Zwischen den zwei benachbarten zweiten Befestigungsmitteln ist eine Verbindungslinie darstellbar, die im Wesentlichen die Mittelpunkte der zweiten und der zugeordneten ersten Befestigungsmittel miteinander verbindet. Der zuglasttragende Abschnitt der Lamelle ist dabei im Wesentlichen symmetrisch zur Verbindungslinie ausgebildet. Der zuglastragende Abschnitt ist radial innen von einer Innenkontur und radial außen von einer Außenkontur begrenzt. Die Innenkontur und die Außenkontur gehen entlang der Umfangsrichtung beidseitig in einen Anbindungsabschnitt über, in der jeweils ein zweites Befestigungsmittel mit der Lamelle stoffschlüssig verbunden ist. Dies erlaubt eine gleichmäßige Einleitung der Zugbeanspruchung in die Lamelle, bei der lokale Spannungserhöhungen reduziert werden.

Die zugrundeliegende Aufgabenstellung wird auch durch eine erfindungsgemäße Industrie-Applikation gelöst. Die Industrie-Applikation weist eine Antriebseinheit auf, die über Kupplung mit einer Abtriebseinheit drehmomentübertragend verbunden ist. Die Antriebseinheit kann beispielsweise als Ausgangswelle eines Elektromotors ausgebildet sein. Die Abtriebseinheit wiederum kann beispielsweise als Eingangswelle einer mechanischen Anwendung, wie beispielsweise einer Pumpe, ausgebildet sein. Infolge eines inkonstanten Verhaltens der Antriebseinheit und/oder der Abtriebseinheit ist die Kupplung im Betrieb Axialversätzen, Radialversätzen und/oder Winkelversätzen unterworfen. Ein inkonstantes Verhalten der Antriebseinheit kann beispielsweise durch ein Anfahren verursacht werden, ein inkonstantes Verhalten der Abtriebseinheit beispielsweise durch ein Leerlaufen einer Pumpe. Die Kupplung ist hierbei als eine Lamellenkupplung gemäß einer der oben skizzierten Ausführungsformen ausgebildet.

Die Erfindung wird im Folgenden anhand einzelner Ausführungsformen beschrieben. Die Merkmale der einzelnen Ausführungsformen sind dabei untereinander kombinierbar. Die Figuren sind insoweit in gegenseitiger Ergänzung zu lesen, dass gleiche Bezugszeichen in den Figuren auch die gleiche technische Bedeutung haben. Es zeigen im Einzelnen:

FIG 1   eine Detailansicht einer ersten Ausführungsform der beanspruchten Lamellenkupplung;

FIG 2   eine Detailansicht einer zweiten Ausführungsform der beanspruchten Lamellenkupplung;

FIG 3   eine schematische Seitenansicht einer Ausführungsform der beanspruchten unbelasteten Lamellenkupplung;

FIG 4   eine schematische Seitenansicht der Lamellenkupplung aus FIG 3 unter einer Belastung;

FIG 5   eine schematische Stirnansicht und ein Längsschnitt einer ersten Ausführungsform einer Lamelle;

FIG 6   eine schematische Stirnansicht und ein Längsschnitt einer zweiten Ausführungsform einer Lamelle;

FIG 7   einen Ausschnitt einer schematischen Stirnsicht einer dritten Ausführungsform einer Lamelle;

FIG 8   einen schematischen Aufbau einer Ausführungsform einer beanspruchten Industrie-Applikation.

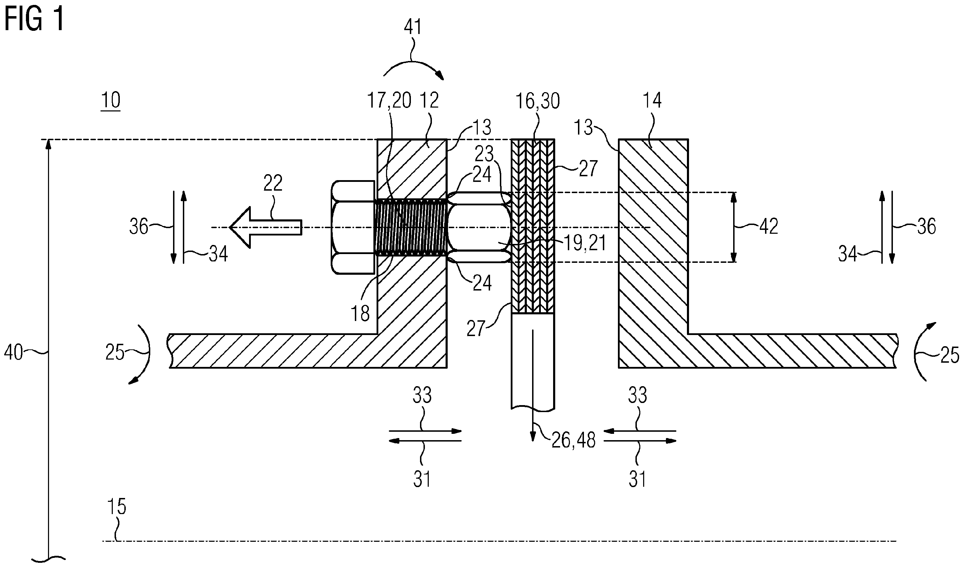

FIG 1 zeigt schematisch eine Detailansicht einer ersten Ausführungsform einer erfindungsgemäßen Lamellenkupplung 10 in einem Längsschnitt. Die Lamellenkupplung 10 weist einen ersten und einen zweiten Flansch 12, 14 auf, die sich entlang einer Hauptdrehachse 15 gegenüberstehen. Über den ersten Flansch 12 wird ein Drehmoment 25 in die Lamellenkupplung 10 eingeleitet, das auf den zweiten Flansch 14 zu übertragen ist. Zwischen dem ersten und zweiten Flansch 12, 14 ist dazu eine Lamelle 16 vorgesehen, die eine Mehrzahl an Lamellenblättern 30 umfasst. Im ersten Flansch 12 ist eine Ausnehmung 18 ausgebildet, in der ein erstes Befestigungsmittel 17 aufgenommen ist. Die Ausnehmung 18 ist an der Lamellenkupplung 10 in einem radial äußeren Bereich ausgebildet. Eine radial äußere Richtung ist in FIG 1 durch den Pfeil 34 dargestellt, eine radial innere Richtung durch den Pfeil 36. Das erste Befestigungsmittel 17 ist als Schraube 20 ausgebildet. Das erste Befestigungsmittel 17 erstreckt sich durch die Ausnehmung 18 und ist vom ersten Flansch 12 lösbar. Ein dem zweiten Flansch 14 zugewandtes Ende des ersten Befestigungsmittels 17 ist mit einem zweiten Befestigungsmittel 19 lösbar verbunden. Das zweite Befestigungsmittel 19 ist dabei als Mutter 21 ausgebildet. Im montierten Zustand sind eine Zugkraft 22 vom zweiten Befestigungsmittel 19 auf das erste Befestigungsmittel 19 übertragbar, wobei das erste Befestigungsmittel 17 zu einem Abstützen am ersten Flansch 12 ausgebildet ist. Ferner ist das zweite Befestigungsmittel 19 dazu ausgebildet, sich in einer Axialrichtung, also entlang der Hauptdrehachse 15, an einem Anschlag 24 an ersten Flansch 12 abzustützen. Der Anschlag 24 umfasst unter anderem eine Begrenzung der Ausnehmung 18 auf einer axial inneren Stirnseite 13 des ersten Flanschs 12, in der das erste Befestigungsmittel 17 aufgenommen ist. Eine axial innere Richtung in FIG 1 durch die Pfeile 33 dargestellt, eine axial äußere Richtung durch die Pfeile 31. Im montierten Zustand wird das zweite Befestigungsmittel 19 durch das erste Befestigungsmittel 17 an den ersten Flansch 12 gedrückt.

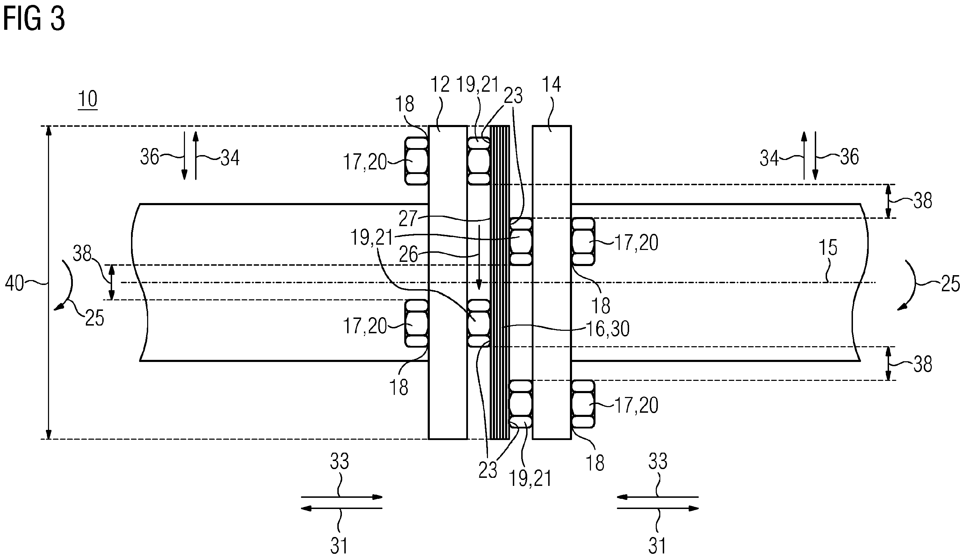

Das zweite Befestigungsmittel 19 ist dabei an einer Stirnfläche 27 der Lamelle 16 angeordnet und mit der Lamelle 16 durch eine stoffschlüssige Verbindung 23 verbunden. Die stoffschlüssige Verbindung 23 ist als Schweißverbindung ausgebildet und ist durch Elektronenstrahlschweißen herstellbar. Ferner ist die stoffschlüssige Verbindung 23 punktuell oder um das zweite Befestigungsmittel 19 umlaufend ausbildbar. Die stoffschlüssige Verbindung 23 ist unmittelbar zwischen dem zweiten Befestigungsmittel 19 und der Lamelle 16 hergestellt. Infolge der stoffschlüssigen Verbindung 19 und des ersten Befestigungsmittels 17, das in der Ausnehmung 18 aufgenommen ist, wird durch ein Drehmoment 25, das auf den ersten Flansch 12 einwirkt, in der Lamelle 16 eine Zugbeanspruchung 26 hervorgerufen, die wiederum auf das erste Befestigungsmittel 17 als Querkraft 48 einwirkt. Dadurch ist das Drehmoment 25 vom ersten Flansch 12 auf den zweiten Flansch 14 übertragbar. Des Weiteren ist die in der Lamelle 16 hervorgerufene Zugbeanspruchung 26 durch das erste Befestigungsmittel 17 als Biegebeanspruchung 41 aufnehmbar. Das zweite Befestigungsmittel 19 weist einen geringen Durchmesser 42 auf, durch den eine in FIG 3 näher beschriebene freie Lamellenlänge 38 erhöht wird. Die Lamelle 16 ist im Bereich des zweiten Befestigungsmittels 19 frei von Bohrungen oder Ausnehmungen. Damit ist die Lamelle 16 auch frei von Spannungserhöhungen, die sich infolge von Kerbspannungen bei Bohrungen ergeben. Infolgedessen ist eine mechanische Tragfähigkeit der Lamelle 16 stärker ausnutzbar. Dadurch, dass die stoffschlüssige Verbindung 23 unmittelbar zwischen der Lamelle 16 und dem zweiten Befestigungsmittel 19 hergestellt ist, erfordert die Ausführungsform gemäß FIG 1 eine reduzierte Anzahl an Bauteilen und ist dadurch wirtschaftlich herstellbar. Durch die verbesserter Ausnutzung des für die Lamelle 16 eingesetzten Materials ist die Lamelle 16 kompakt ausbildbar. Infolgedessen weist die Lamelle 16 einen gegenüber den aus dem Stand der Technik bekannten Lösungen einen reduzierten Außendurchmesser 40 auf. Der Außendurchmesser 40 stellt dabei auch den Außendurchmesser 40 der Lamellenkupplung 10 dar.

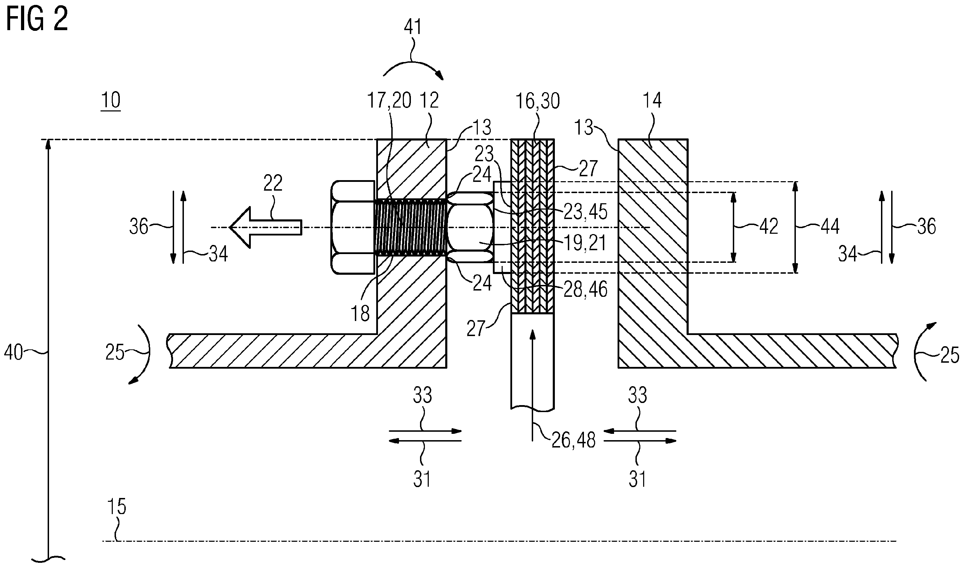

In FIG 2 ist schematisch eine Detailansicht einer ersten Ausführungsform einer erfindungsgemäßen Lamellenkupplung 10 in einem Längsschnitt gezeigt. Die Lamellenkupplung 10 weist einen ersten und einen zweiten Flansch 12, 14 auf, die sich entlang einer Hauptdrehachse 15 gegenüberstehen. Über den ersten Flansch 12 wird ein Drehmoment 25 in die Lamellenkupplung 10 eingeleitet, das auf den zweiten Flansch 14 zu übertragen ist. Zwischen dem ersten und zweiten Flansch 12, 14 ist dazu eine Lamelle 16 angeordnet, die eine Mehrzahl an Lamellenblättern 30 umfasst. Im ersten Flansch 12 ist eine Ausnehmung 18 ausgebildet, in der ein erstes Befestigungsmittel 17 aufgenommen ist. Die Ausnehmung 18 ist an der Lamellenkupplung 10 in einem radial äußeren Bereich ausgebildet. Eine radial äußere Richtung ist in FIG 2, analog zu FIG 1, durch den Pfeil 34 dargestellt, eine radial innere Richtung durch den Pfeil 36. Das erste Befestigungsmittel 17 ist als Schraube 20 ausgebildet ist. Das erste Befestigungsmittel 17 erstreckt sich durch die Ausnehmung 18 und ist vom ersten Flansch 12 lösbar. Ein dem zweiten Flansch 14 zugewandtes Ende des ersten Befestigungsmittels 17 ist mit einem zweiten Befestigungsmittel 19 lösbar verbunden. Das zweite Befestigungsmittel 19 ist dabei als Mutter 21 ausgebildet. Im montierten Zustand sind eine Zugkraft 22 vom zweiten Befestigungsmittel 19 auf das erste Befestigungsmittel 19 übertragbar, wobei das erste Befestigungsmittel 17 zu einem Abstützen am ersten Flansch 12 ausgebildet ist. Ferner ist das zweite Befestigungsmittel 19 dazu ausgebildet, sich in einer Axialrichtung, also entlang der Hauptdrehachse 15, an einem Anschlag 24 an ersten Flansch 12 abzustützen. Der Anschlag 24 umfasst unter anderem eine Begrenzung der Ausnehmung 18 auf einer axial inneren Stirnseite 13 des ersten Flanschs 12, in der das erste Befestigungsmittel 17 aufgenommen ist. Eine axial innere Richtung in FIG 2 durch die Pfeile 33 dargestellt, eine axial äußere Richtung durch die Pfeile 31. Im montierten Zustand wird das zweite Befestigungsmittel 19 durch das erste Befestigungsmittel 17 an den ersten Flansch 12 gedrückt.

Das zweite Befestigungsmittel 19 ist dabei an einem Distanzelement 28 angeordnet, das wiederum an einer Stirnfläche 27 der Lamelle 16 angeordnet und mit der Lamelle 16 durch eine stoffschlüssige Verbindung 23 verbunden. Das zweite Befestigungselement 19 ist dabei über eine Distanzelement-Anbindung 45 mit dem Distanzelement 28 verbunden. Die Distanzelement-Anbindung 45 ist als stoffschlüssige Verbindung 23 ausgebildet, die beispielsweise durch Schweißen, insbesondere Elektronenstrahlschweißen, herstellbar ist. Das Distanzelement 28 ist als im Wesentlichen zylindrische Buchse 46 ausgebildet. Das Distanzelement 28 wiederum ist über eine stoffschlüssige Verbindung 23, die auch durch Schweißen, insbesondere Elektronenstrahlschweißen, herstellbar ist. Durch das Distanzelement 28 ist eine axiale Position der Lamelle 16 einstellbar. Das Distanzelement 46 ist in einem separaten Herstellungsschritt auf der Lamelle 16 befestigbar und so eine hohe Positionsgenauigkeit für das Distanzelement 46 erzielbar. Basierend hierauf ist eine hohe Positionsgenauigkeit für das zweite Befestigungsmittel 17 erzielbar. Das Distanzelement 28 weist einen Außendurchmesser 44 auf, durch den eine freie Lamellenlänge 38, wie beispielsweise in FIG 3 dargestellt, bestimmt ist. Ferner erlaubt das Distanzelement 46 eine großflächigere Anbindung des zweiten Befestigungsmittels 19 an die Lamelle 16, was wiederum eine erhöhte konstruktive Freiheit bietet. Infolgedessen besteht für die Anbindung des zweiten Befestigungsmittels 19 und der Lamelle 16 die Möglichkeit einer Gestaltoptimierung.

Ferner ist die stoffschlüssige Verbindung 23 punktuell oder um das zweite Befestigungsmittel 19 oder das Distanzelement 46 umlaufend ausbildbar. Die stoffschlüssige Verbindung 23 ist zwischen dem Distanzelement 28 und der Lamelle 16 hergestellt. Dadurch dient die stoffschlüssige Verbindung 23 zwischen der Lamelle 16 und des Distanzelement 28 auch der Befestigung des zweiten Befestigungsmittels 19 an der Lamelle 19. Folglich wird im ersten Befestigungsmittel 17, das in der Ausnehmung 18 aufgenommen ist, durch ein Drehmoment 25, das auf den ersten Flansch 12 einwirkt, in der Lamelle 16 eine Zugbeanspruchung 26 hervorgerufen, die auf das erste Befestigungsmittel 17 als Querkraft 48 einwirkt. Dadurch ist das Drehmoment 25 vom ersten Flansch 12 auf den zweiten Flansch 14 übertragbar. Des Weiteren ist die in der Lamelle 16 hervorgerufene Zugbeanspruchung 26 durch das erste Befestigungsmittel 17 als Biegebeanspruchung 41 aufnehmbar. Das zweite Befestigungsmittel 19 weist einen geringen Durchmesser 42 auf, durch den eine in FIG 3 näher beschriebene freie Lamellenlänge 38 erhöht wird. Die Lamelle 16 ist im Bereich des zweiten Befestigungsmittels 19 frei von Bohrungen oder Ausnehmungen. Damit ist die Lamelle 16 auch frei von Spannungserhöhungen, die sich infolge von Kerbspannungen bei Bohrungen ergeben. Infolgedessen ist eine mechanische Tragfähigkeit der Lamelle 16 stärker ausnutzbar. Dadurch, dass die Lamelle 16 mittelbar über das Distanzelement 28 mit dem zweiten Befestigungsmittel 19 verbunden ist, bietet die Ausführungsform gemäß FIG 2 eine verbesserte Präzision in der Fertigung. Insbesondere ist das Distanzelement 28 in einem separaten Herstellungsschritt mit hoher Positionsgenauigkeit auf der Lamelle 16 befestigbar. Zusätzlich ist das Distanzelement 28 nach dem Verbinden mit der Lamelle 16 axial anpassbar, beispielsweise durch Fräsen oder Drehen. Dadurch ist insgesamt eine hohe Maßhaltigkeit bei der Lamellenkupplung 10 erzielbar. Durch die verbesserter Ausnutzung des für die Lamelle 16 eingesetzten Materials ist die Lamelle 16 kompakt ausbildbar. Infolgedessen weist die Lamelle 16 einen gegenüber den aus dem Stand der Technik bekannten Lösungen einen reduzierten Außendurchmesser 40 auf. Der Außendurchmesser 40 stellt dabei auch den Außendurchmesser 40 der Lamellenkupplung 10 dar.

Darüber hinaus ist in FIG 3 eine weitere Ausführungsform der beanspruchten Lamellenkupplung 10 in einer Seitenansicht dargestellt. Die Lamellenkupplung 10 weist einen ersten Flansch 12 und einen zweiten Flansch 14 auf, über die ein Drehmoment 25 zu übertragen ist. Der erste und zweite Flansch 12, 14 weisen jeweils einander zugewandt eine Stirnseite 13 auf. Zwischen den Stirnseiten 13 der ersten und zweiten Flansches 12, 14 ist eine Lamelle 16 angeordnet, die eine Mehrzahl an Lamellenblättern 30 aufweist. Im ersten und zweiten Flansch 12, 14 sind jeweils entlang einer Axialrichtung, die sich parallel zu einer Hauptdrehachse 15 der Lamellenkupplung 10 erstreckt, eine Mehrzahl an Ausnehmungen 18 ausgebildet. In den Ausnehmungen 18 ist jeweils ein erstes Befestigungsmittel 17 lösbar aufgenommen. Dabei ist das erste Befestigungsmittel 17 als Schraube 20 ausgebildet. Ferner sind die jeweiligen ersten Befestigungsmittel 17 dazu ausgebildet, eine Zugkraft 22, wie in FIG 1 und FIG 2 skizziert, aufzunehmen. Die ersten Befestigungsmittel 17 wirken jeweils mit einem zweiten Befestigungsmittel 19 zusammen, das an der Lamelle 16 befestigt ist. Das erste und zweite Befestigungsmittel 17, 19 sind lösbar mit einander verbunden, wobei das zweite Befestigungsmittel 19 dazu ausgebildet ist, eine Zugkraftbeanspruchung in das erste Befestigungsmittel 17 einzuleiten. Die zweiten Befestigungsmittel 19 sind in FIG 3 ferner als Muttern 21 ausgebildet. Die zweiten Befestigungsmittel 19 sind ferner über eine stoffschlüssige Verbindung 23 mit der Lamelle 16 verbunden. Die stoffschlüssige Verbindung 23 ist als Schweißverbindung ausgebildet und ist unmittelbar an einer Stirnfläche 27 der Lamelle 16 ausgebildet.

Entlang einer Umfangsrichtung der Lamelle 16 betrachtet, ist die Lamelle 16 alternierend an unterschiedlichen Stirnflächen 27 mit zweiten Befestigungsmitteln 19 versehen, die jeweils wiederum mit ersten Befestigungsmitteln 17 lösbar verbunden sind. Die entsprechenden ersten Befestigungsmittel 17 sind, entlang der Umfangsrichtung der Lamelle 16 betrachtet, in Ausnehmungen 18 alternierend am ersten und zweiten Flansch 12, 14 aufgenommen. Die Lamelle 16 wiederum ist zum Aufnehmen einer Zugbeanspruchung 26 ausgebildet, durch die zwischen dem ersten und zweiten Flansch 12, 14 eine drehmomentübertragende Verbindung herstellbar ist. Zwischen den zweiten Befestigungsmitteln 19 auf den unterschiedlichen Stirnflächen 27 liegt ein Abschnitt der Lamelle 16, durch den eine freie Lamellenlänge 38 definiert ist. Die freie Lamellenlänge 38 ist durch die kompakte Form der zweiten Befestigungsmittel 19 gegenüber bekannten Lamellenkupplungen erhöht. Die Abschnitte, die die freie Lamellenlänge 38 definieren, erlauben ein Aufnehmen eines Axialversatzes und/oder eines Radialversatzes zwischen dem ersten und zweiten Flansch. Ein Axialversatz ist dabei durch eine Relativbewegung zwischen dem ersten und zweiten Flansch 12, 14 nach axial innen oder axial außen möglich. Eine axial äußere Richtung ist in FIG 3 durch die Pfeile 31, eine axial innere Richtung durch die Pfeile 33 dargestellt. Entsprechend ist eine radial äußere Richtung durch die Pfeile 34 und eine radial innere Richtung durch die Pfeile 36 skizziert. Gleichermaßen ist ein Winkelversatz zwischen dem ersten und zweiten Flansch 12, 14 durch die Lamelle 16 aufnehmbar. Ein Winkelversatz ist dabei durch eine Relativdrehung zwischen dem ersten und zweiten Flansch 12, 14 um die Hauptdrehachse 15 hervorrufbar. Je höher die freie Lamellenlänge 28 ausgebildet ist, umso besser ist die Lamelle 16 geeignet, entsprechende Formen von Versatz aufzunehmen.

Dadurch, dass die zweiten Befestigungsmittel 19 stoffschlüssig mit der Lamelle 16 verbunden sind, ist diese frei von Ausnehmungen, z.B. Bohrungen, ausgebildet. Infolgedessen ist bei der Lamelle 16 eine erhöhte Materialausnutzung möglich. Dadurch bietet die Lamelle 16 eine erhöhte mechanische Leistungsfähigkeit bei reduziertem Außendurchmesser 40. Der Außendurchmesser 40 ist im Wesentlichen durch die Lamelle 16 vorgegeben, wodurch wiederum auch der Außendurchmesser 40 der Lamellenkupplung 10 ist. In FIG 3 ist die dargestellte Lamellenkupplung 10 unbelastet, es liegt also kein Axialversatz, Radialversatz oder Winkelversatz zwischen dem ersten und zweiten Flansch 12, 14 vor.

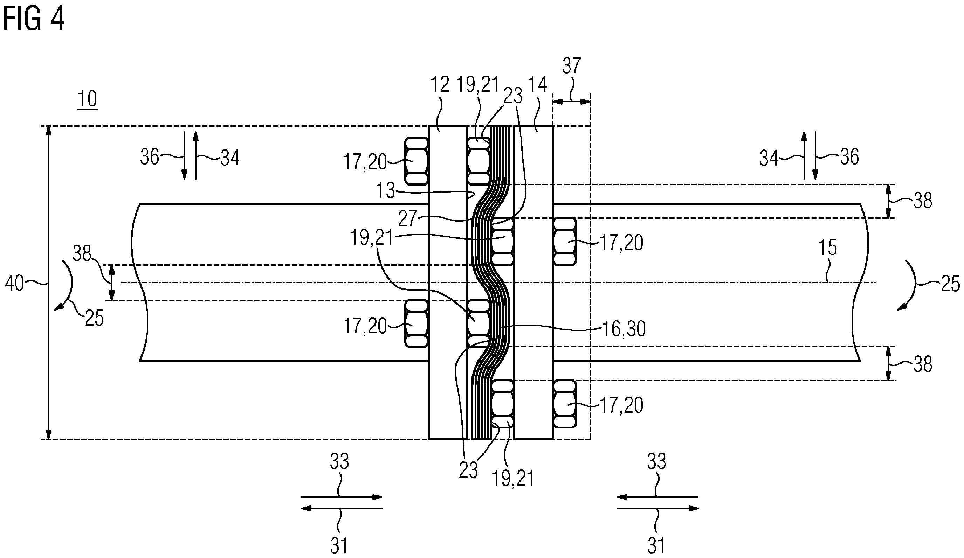

Die FIG 4 zeigt schematisch in einer Seitenansicht eine Lamellenkupplung 10 gemäß FIG 3, die einem Axialversatz 37 unterworfen ist. Darüber hinaus entsprechen die Bezugszeichen in FIG 3 denen in FIG 4. Der Axialversatz 37 zwischen dem ersten und zweiten Flansch 12, 14 führt dazu, dass die Lamelle 16 eine im Wesentliche S-förmige Krümmung annimmt. Durch die erhöhte freie Lamellenlänge 38 zwischen den zweiten Befestigungsmitteln 19 werden in diesem Bereich vorliegende mechanische Beanspruchungen reduziert. Infolgedessen wird das Verformungsvermögen der Lamelle 16 zwischen den zweiten Befestigungsmitteln 19 in geringerem Umfang in Anspruch genommen. Dies führt, ausgehend von gleichbleibenden Axialversätzen 37, zu einer gesteigerten Lebensdauer der Lamellenkupplung 10.

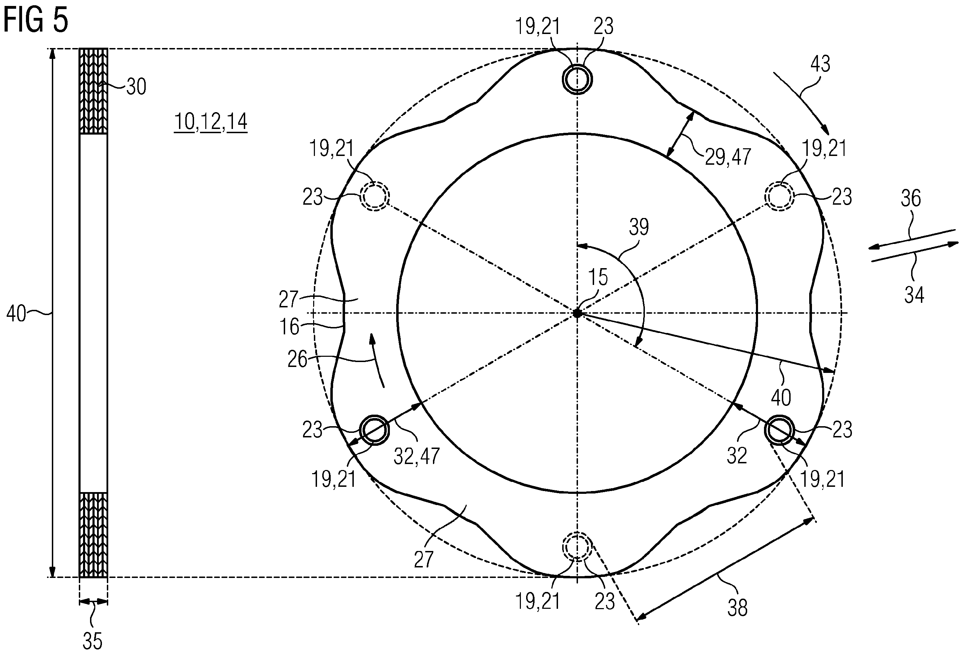

In FIG 5 ist in einer Draufsicht und einem Längsschnitt einer Lamelle 16 gemäß einer ersten Ausführungsform dargestellt. Die Lamelle 16 ist im Wesentlichen ringförmig ausgebildet und in einem montierten Zustand in einer Lamellenkupplung 10 im Wesentlichen auf deren Hauptdrehachse 15 zentriert angebracht. Die Lamelle 16 umfasst eine Mehrzahl von Lamellenblättern 30, die im Wesentlichen schichtförmig miteinander verbunden sind. Die Lamelle 16 weist entlang einer Umfangsrichtung 43 eine veränderliche Radialbreite 47 auf. Die Lamelle 16 ist in FIG 5 auf der gezeigten Stirnfläche 27 im Wesentlichen symmetrisch mit einem Teilungswinkel 39 von 120° eingeteilt. Die Stirnfläche 27, wie für eine Seite der Lamelle 16 dargestellt, ist die Oberfläche, auf die die flächenspezifische Leistungsdichte der Lamellenkupplung 10 bezogen ist. Im Bereich einer maximalen Radialbreite 32 sind zweite Befestigungsmittel 19 angebracht, die als Muttern 21 ausgebildet sind. Die zweiten Befestigungsmittel 19 sind dabei über eine stoffschlüssige Verbindung 23, die als Schweißverbindung ausgebildet ist, mit der Lamelle 16 verbunden. Die zweiten Befestigungsmittel 19 sind dabei als Muttern 21 ausgebildet, die alternierend auf beiden Stirnflächen 27 der Lamelle 16 angebracht sind. In den Bereichen mit maximaler Radialbreite 32 ist die Lamelle 16 in einer radial äußeren Richtung ausgebaucht. Eine radial äußere Richtung ist durch den Pfeil 34 und eine radial innere Richtung durch den Pfeil 36 abgebildet. Zwischen den Bereichen mit maximaler Radialbreite 32 sind Bereiche mit einer minimalen Radialbreite 29 ausgebildet. Ferner wird durch einen Abstand zwischen zwei zweiten Befestigungsmitteln 19, die in Umfangrichtung 43 benachbart zueinander angeordnet sind und sich an unterschiedlichen Stirnflächen 27 der Lamelle 16 befestigt sind, eine freie Lamellenlänge 38 definiert. Die freie Lamellenlänge 38 ist dabei der Bereich, der verformbar ausgebildet ist, und somit dazu geeignet ist, einen Versatz zwischen einem ersten und einem zweiten Flansch 12, 14 in einer Lamellenkupplung 10, wie beispielsweise in FIG 3 und FIG 4 skizziert, aufzunehmen. Das Verhältnis zwischen der minimalen Radialbreite 29 und der maximalen Radialbreite 32 beträgt bei der Lamelle 16 nach FIG 5 bis zu 1,8. Dadurch, dass die Lamelle 16 zumindest im Bereich der maximalen Radialbreite 29, also im Bereich der zweiten Befestigungsmittel 19, frei von Ausnehmungen, wie beispielsweise Bohrungen, ausgebildet ist, ist die gesamte vorhandene Radialbreite 47 zum übertragen einer Zugbeanspruchung 26 geeignet, durch die eine drehmomentübertragende Verbindung zwischen einem ersten und einem zweiten Flansch 12, 14 einer Lamellenkupplung 10, wie in FIG 1 bis FIG 4 dargestellt, ermöglicht. Dadurch, dass die Lamelle 16 zumindest im Bereich der zweiten Befestigungsmittel 19 durchgängig, also frei von Ausnehmungen ausgebildet ist, werden entsprechende Kerbspannungen vermieden, die eine größere Dimensionierung der Lamelle 16 erfordern würden. Infolgedessen weist die Lamelle 16 einen reduzierten Außendurchmesser 40 auf. Darüber hinaus weist die Lamelle 16 zumindest entlang der Umfangsrichtung betrachtet eine gleichbleibende Lamellendicke 35 auf. Dadurch ist die Lamelle 16 in einfacher Weise herstellbar und gleichzeitig ein reduzierter Außendurchmesser 40 erzielbar.

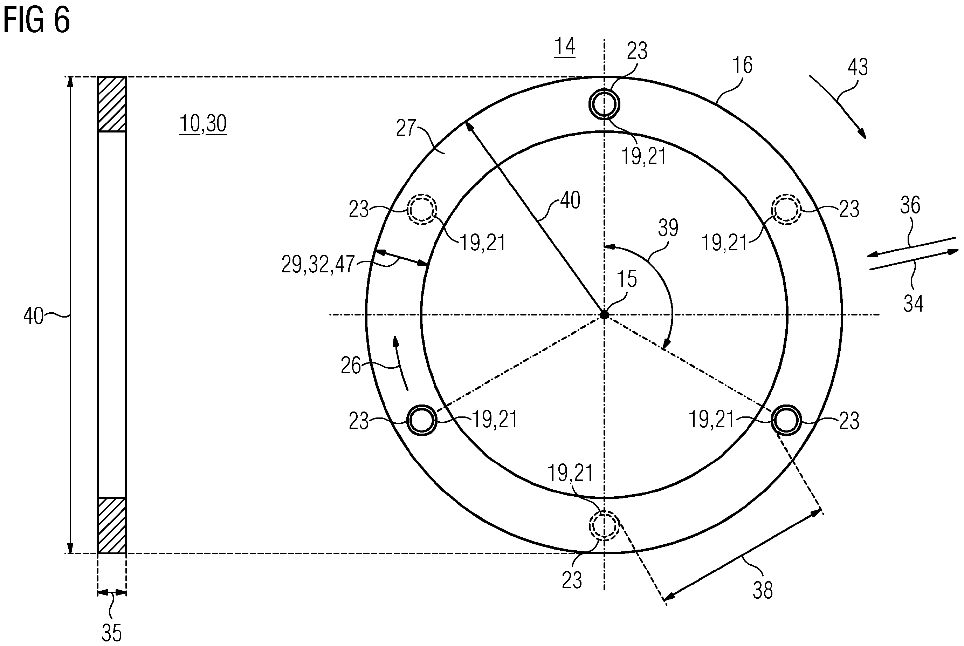

Eine zweite Ausführungsform der beanspruchten Lamelle 16 ist in FIG 6 in einer Draufsicht und einem Längsschnitt dargestellt. Die Lamelle 16 ist im Wesentlichen ringförmig ausgebildet und in einem montierten Zustand in einer Lamellenkupplung 10 im Wesentlichen auf deren Hauptdrehachse 15 zentriert angebracht. Die Lamelle 16 umfasst eine Mehrzahl von Lamellenblättern 30, die im Wesentlichen schichtförmig miteinander verbunden sind. Die Lamelle 16 weist entlang einer Umfangsrichtung 43 eine im Wesentlichen konstante Radialbreite 47 auf. Die Lamelle 16 ist in FIG 6 auf der gezeigten Stirnfläche 27 im Wesentlichen symmetrisch mit einem Teilungswinkel 39 von 120° eingeteilt. Die zweiten Befestigungsmittel 19 auf einer Stirnseite 27 der Lamelle 16, die als Muttern 21 ausgebildet sind, sind im Wesentlichen entlang dieser symmetrischen Teilung positioniert. Die zweiten Befestigungsmittel 19 sind dabei über eine stoffschlüssige Verbindung 23, die als Schweißverbindung ausgebildet ist, mit der Lamelle 16 verbunden. Die zweiten Befestigungsmittel 19 sind dabei als Muttern 21 ausgebildet, die alternierend auf beiden Stirnflächen 27 der Lamelle 16 angebracht sind. Zwischen den einzelnen zweiten Befestigungsmitteln 19 ist die Radialbreite 47 im Wesentlichen konstant, so dass die Lamelle 16 im Wesentlichen eine Ringform aufweist. Ferner wird durch einen Abstand zwischen zwei zweiten Befestigungsmitteln 19, die in Umfangrichtung 43 benachbart zueinander angeordnet sind und sich an unterschiedlichen Stirnflächen 27 der Lamelle 16 befestigt sind, eine freie Lamellenlänge 38 definiert. Die freie Lamellenlänge 38 ist dabei der Bereich, der verformbar ausgebildet ist, und somit dazu geeignet ist, einen Versatz zwischen einem ersten und einem zweiten Flansch 12, 14 in einer Lamellenkupplung 10, wie beispielsweise in FIG 3 und FIG 4 skizziert, aufzunehmen. Aufgrund der im Wesentlichen konstanten Radialbreite 47, entspricht eine minimale Radialbreite 29 der Lamelle 16 einer maximalen Radialbreite 32 der Lamelle 16. Damit ist das Verhältnis zwischen der minimalen und der maximalen Radialbreite 29, 32 bei der Lamelle 16 nach FIG 6 im Wesentlichen 1,0. Dadurch, dass die Lamelle 16 zumindest im Bereich der zweiten Befestigungsmittel 19 frei von Ausnehmungen, wie beispielsweise Bohrungen, ausgebildet ist, ist die gesamte vorhandene Radialbreite 47 zum übertragen einer Zugbeanspruchung 26 geeignet, durch die eine drehmomentübertragende Verbindung zwischen einem ersten und einem zweiten Flansch 12, 14 einer Lamellenkupplung 10, wie in FIG 1 bis FIG 4 dargestellt, ermöglicht. Dadurch, dass die Lamelle 16 zumindest im Bereich der zweiten Befestigungsmittel 19 durchgängig, also frei von Ausnehmungen ausgebildet ist, werden entsprechende Kerbspannungen vermieden, die eine größere Dimensionierung der Lamelle 16 erfordern würden. Die Lamelle 16 weist dadurch insgesamt einen reduzierten Außendurchmesser 40 auf. Darüber hinaus weist die Lamelle 16 zumindest entlang der Umfangsrichtung betrachtet eine gleichbleibende Lamellendicke 35 auf. Dadurch ist die Lamelle 16 in einfacher Weise herstellbar und gleichzeitig ein reduzierter Außendurchmesser 40 erzielbar.

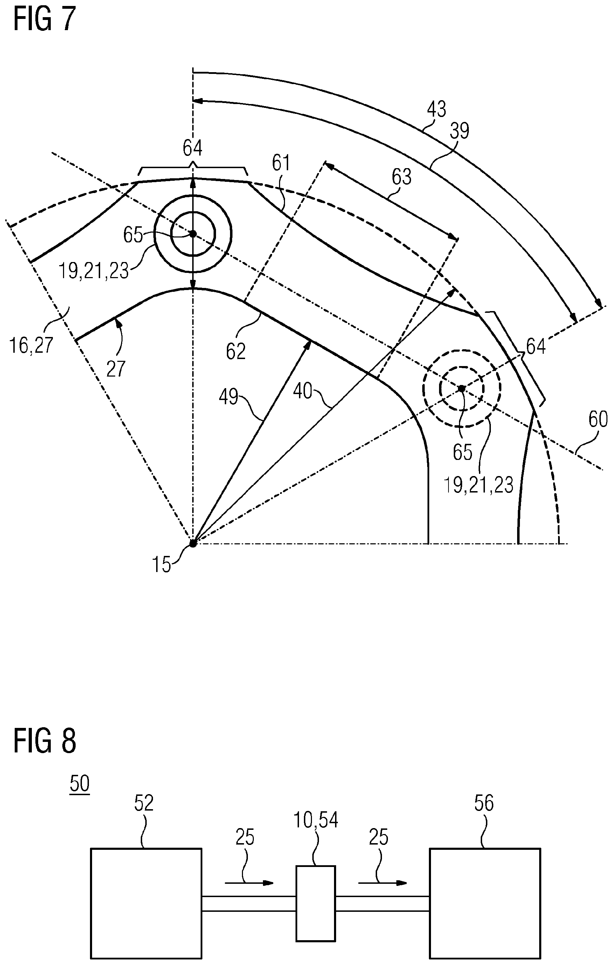

Ein Ausschnitt einer schematischen Stirnansicht einer dritten Ausführungsform einer Lamelle 16 ist in FIG 7 abgebildet. Auf den gegenüberliegenden Stirnflächen 27 der Lamelle 16 sind alternierend auf beiden Seiten zweite Befestigungsmittel 19 angebracht, die mit der Lamelle 16 über eine stoffschlüssige Verbindung 23 verbunden sind. Dabei sind die zweiten Befestigungsmittel 19 als Muttern 21 ausgebildet. Zwischen zwei zweiten Befestigungsmitteln 19 liegen, bezogen auf eine Hauptdrehachse 15 einer Lamellenkupplung 10, der die Lamelle 16 zugeordnet ist, im Wesentlichen gleiche große Teilungswinkel 39. Mittelpunkte 65 von benachbarten zweiten Befestigungsmitteln 19 sind paarweise durch eine Verbindungslinie 60 miteinander verbunden. Innerhalb eines Feldes eines Teilungswinkels 39 ist so, entlang der Verbindungslinie 60 zwischen den zweiten Befestigungsmitteln 19 ein zuglasttragender Abschnitt 63 der Lamelle 16 ausgebildet. Der zuglasttragende Abschnitt 63 wird einer in FIG 1 dargestellten Zugbeanspruchung 26 unterworfen, wenn durch die Lamelle 16 ein Drehmoment 25, wie in FIG 1 dargestellt, übertragen wird. Der zuglastragende Abschnitt 63 ist radial außen durch eine Außenkontur 61 der Lamelle 16 begrenzt. Ferner ist der zuglasttragende Abschnitt 63 radial innen durch eine Innenkontur 62 der Lamelle 16 begrenzt. Der zuglastragende Abschnitt 63 ist bezogen auf die Verbindungslinie 60 im Wesentlichen symmetrisch ausgebildet. Dementsprechend sind die Innenkontur 62 und die Außenkontur 61 der Lamelle 16 zwischen zwei zweiten Befestigungsmitteln 19 zumindest abschnittsweise zueinander symmetrisch ausgebildet. Dabei ist die Außenkontur 61 im Wesentlichen als eine zu einem Außendurchmesser 40 der Lamelle 16 konkave Bogenlinie ausgebildet. Die Innenkontur 62 wiederum ist durch einen entlang der Umfangsrichtung 43 der Lamelle 16 betrachtet, einen veränderlichen Innendurchmesser 49 dar. Ferner geht der zuglasttragende Abschnitt 63 entlang der Umfangsrichtung 43 beidseitig in Übergangsbereiche 64 über, in denen die zweiten Befestigungsmittel 19 positioniert sind. Durch die Form des zuglastragenden Abschnitts 63 wird eine verbesserte, gleichmäßigere Spannungsverteilung in der Lamelle 16 erzielt. Dadurch ist eine erhöhte Materialausnutzung in der Lamelle 16 erreichbar, was wiederum einem Leichtbaukonzept Rechnung trägt.

In FIG 8 ist schematisch der Aufbau einer Industrie-Applikation 50 dargestellt, die eine Antriebseinheit 52 umfasst, die dazu ausgebildet ist, ein Drehmoment 25 zur Verfügung zu stellen, mit dem eine Abtriebseinheit 56 betreibbar ist. Die Antriebseinheit 52 kann beispielsweise als Elektromotor, Verbrennungsmotor, Hydraulikmotor, oder als Antriebswelle ausgebildet sein. Die Abtriebseinheit 56 wiederum kann beispielsweise als eine Abtriebswelle, eine Mühle, Vertikalmühle, Zuckermühle, Zementmühle, Gesteinsbrecher, Förderband, Pumpe, Rollenpresse, Plattenband, Rohrmühle, Drehrohrofen, Drehwerk, Rührwerk, Hubvorrichtung, Müllpresse oder als Schrottpresse, ausgebildet sein. Zwischen der Antriebseinheit 52 und der Abtriebseinheit 56 ist eine Kupplung 54 angebracht, durch die das Drehmoment 25 von der Antriebseinheit 52 auf die Abtriebseinheit 56 übertragbar ist. Die Kupplung 54 ist dazu als eine Lamellenkupplung 10 ausgebildet, die nach zumindest einer der oben skizzierten Ausführungsformen ausgebildet ist. Die Lamellenkupplung 10 ist besonders kompakt ausgebildet und kann in einfacher Weise hergestellt werden. Dadurch kann eine Kupplung 54 zwischen der Antriebseinheit 52 und der Abtriebseinheit 56 auch in engen Bauräumen angebracht werden. Gleichzeitig bietet die Lamellenkupplung 10 ein erhöhtes Maß an Lebensdauer und im Wesentlichen Verschleißfreiheit, wodurch wiederum die Zuverlässigkeit im Betrieb der Industrie-Applikation 50 gesteigert wird.

**Patentansprüche**

1.  Lamellenkupplung (10), umfassend einen ersten und einen zweiten Flansch (12, 14), die über eine Lamelle (16) drehmomentübertragend miteinander verbunden sind, und die Lamelle (16) mit dem ersten Flansch (12) über ein erstes Befestigungsmittel (17) verbunden ist, das mit einem zweiten Befestigungsmittel (19) lösbar verbunden ist, wobei das zweite Befestigungsmittel (19) durch eine stoffschlüssige Verbindung (23) mit der Lamelle (16) verbunden ist, **dadurch gekennzeichnet, dass** die Lamelle (16) zumindest im Bereich des zweiten Befestigungsmittels (19) ausnehmungsfrei ausgebildet ist.

2.  Lamellenkupplung (10) nach Anspruch 1, **dadurch gekennzeichnet, dass** das erste Befestigungsmittel (17) als Schraube, Bolzen, Gewindebolzen, oder Passschraube ausgebildet ist, und/oder das zweite Befestigungsmittel (19) als Mutter oder Schweißmutter ausgebildet ist.

3.  Lamellenkupplung (10) nach Anspruch 1 oder 2, **dadurch gekennzeichnet, dass** die stoffschlüssige Verbindung (23) als Schweißverbindung, Lötverbindung, Hartlötverbindung oder Klebung ausgebildet ist.

4.  Lamellenkupplung (10) nach Anspruch 3, **dadurch gekennzeichnet, dass** die stoffschlüssige Verbindung (23) durch Elektronenstrahlschweißen oder Laserschweißen hergestellt ist.

5.  Lamellenkupplung (10) nach einem der Ansprüche 1 bis 4, **dadurch gekennzeichnet, dass** der zweite Flansch (14) über ein erstes Befestigungsmittel (17) mit der Lamelle (16) lösbar verbunden ist, die mit dem zweiten Befestigungsmittel (19) verbunden ist, das durch eine stoffschlüssige Verbindung (23) mit der Lamelle (16) verbunden ist.

6.  Lamellenkupplung (10) nach Anspruch 5, **dadurch gekennzeichnet, dass** ein Abstand zwischen zwei benachbarten zweiten Befestigungsmitteln (19), die jeweils mit der Lamelle (16) stoffschlüssig verbunden sind, einer freien Lamellenlänge (38) entspricht.

7.  Lamellenkupplung (10) nach einem der Ansprüche 1 bis 6, **dadurch gekennzeichnet, dass** zwischen zweiten Befestigungsmittel (19) und der Lamelle (16) ein Distanzelement (28) angeordnet ist, und die stoffschlüssige Verbindung (23) zwischen der Lamelle (16) und dem Distanzelement (28) ausgebildet ist.

8.  Lamellenkupplung (10) nach einem der Ansprüche 1 bis 6, **dadurch gekennzeichnet, dass** die stoffschlüssige Verbindung (23) unmittelbar zwischen dem ersten Befestigungsmittel (17) und der Lamelle (16) ausgebildet ist.

9.  Lamellenkupplung (10) nach einem der Ansprüche 1 bis 8, **dadurch gekennzeichnet, dass** die Lamellenkupplung (10) eine flächenspezifische Leistungsdichte von 100 MW/$m^2$ bis 400 MW/$m^2$, bevorzugt von 150 MW/$m^2$ bis 350 MW/$m^2$, weiter bevorzugt von 160 MW/$m^2$ bis 280 MW/$m^2$ aufweist.

10. Lamellenkupplung (10) nach einem der Ansprüche 1 bis 8, **dadurch gekennzeichnet, dass** erste Befestigungsmittel (17) am ersten und/oder zweiten Flansch (12, 14) zur Aufnahme einer Querkraft (48) ausgebildet ist.

11. Lamellenkupplung (10) nach einem der Ansprüche 1 bis 10, **dadurch gekennzeichnet, dass** eine maximale Radialbreite (32) der Lamelle (16) dem 1,0-fachen bis 1,8-fachen, bevorzugt dem 1,-0-fachen bis 1,5-fachen, besonders bevorzugt, dem 1,0-fachen bis 1,2-fachen einer minimalen Radialbreite (29) der Lamelle (19) entspricht.

12. Lamellenkupplung (10) nach einem der Ansprüche 1 bis 11, **dadurch gekennzeichnet, dass** die Lamelle (16) eine durchgängig konstante Lamellendicke (35) aufweist.

13. Lamellenkupplung (10) nach einem der Ansprüche 1 bis 12, **dadurch gekennzeichnet, dass** zwischen zwei benachbarten zweiten Befestigungsmitteln (19) ein zuglastragender Abschnitt (63) der Lamelle (16) ausgebildet ist, der bezüglich einer Verbindungslinie (60) zwischen den zwei benachbarten Befestigungsmitteln (19) symmetrisch ausgebildet ist.

14. Industrie-Applikation (50), umfassend eine Antriebseinheit (52), die über eine Kupplung (54) mit einer Abtriebseinheit (56) drehmomentübertragend verbunden ist, **dadurch gekennzeichnet, dass** die Kupplung (54) als Lamellenkupplung (10) nach einem der Ansprüche 1 bis 13 ausgebildet ist.

**Claims**

1. Multi-disk coupling (10), comprising a first and a second flange (12, 14), which are connected to one another in a torque-transmitting manner by way of a multi-disk (16), and the multi-disk (16) is connected to the first flange (12) by way of a first fastening means (17), which is detachably connected to a second fastening means (19), wherein the second fastening means (19) is connected to the multi-disk (16) by means of a material-bonded connection (23), **characterised in that** the multi-disk (16) is embodied to be cutout-free at least in the region of the second fastening means (19).

2. Multi-disk coupling (10) according to claim 1, **characterised in that** the first fastening means (17) is embodied as a screw, bolt, threaded bolt or fitted bolt, and/or the second fastening means (19) is embodied as a nut or welded nut.

3. Multi-disk coupling (10) according to claim 1 or 2, **characterised in that** the material-bonded connection (23) is embodied as a welded connection, solder connection, hard solder connection or adhesion.

4. Multi-disk coupling (10) according to claim 3, **characterised in that** the material-bonded connection (23) is established by means of electron beam welding or laser welding.

5. Multi-disk coupling (10) according to one of claims 1 to 4, **characterised in that** the second flange (14) is detachably connected to the multi-disk (16) by way of a first fastening means (17), which is connected to the second fastening means (19) which is connected to the multi-disk (16) by a material-bonded connection (23).

6. Multi-disk coupling (10) according to claim 5, **characterised in that** a distance between two adjacent second fastening means (19), which are each connected with a material bond to the multi-disk (16), corresponds to a free multi-disk length (38).

7. Multi-disk coupling (10) according to one of claims 1 to 6, **characterised in that** a spacer (28) is arranged between second fastening means (19) and the multi-disk (16), and the material-bonded connection (23) is embodied between the multi-disk (16) and the spacer (28).

8. Multi-disk coupling (10) according to one of claims 1 to 6, **characterised in that** the material-bonded connection (23) is embodied directly between the first fastening means (17) and the multi-disk (16).

9. Multi-disk coupling (10) according to one of claims 1 to 8, **characterised in that** the multi-disk coupling (10) has a surface-specific power density of 100 MW/m to 400 MW/m$^2$, preferably of 150 MW/m$^2$ to 350 MW/m$^2$, further preferably of 160 MW/m$^2$ to 280 MW/m$^2$.

10. Multi-disk coupling (10) according to one of claims 1 to 8, **characterised in that** first fastening means (17) on the first and/or second flange (12, 14) is embodied for receiving a transverse force (48).

11. Multi-disk coupling (10) according to one of claims 1 to 10, **characterised in that** a maximum radial width (32) of the multi-disk (16) corresponds to 1.0 times to 1.8 times, preferably 1.0-times to 1.5-times, particularly preferably 1.0-times to 1.2-times a minimal radial width (29) of the multi-disk (19).

12. Multi-disk coupling (10) according to one of claims 1 to 11, **characterised in that** the multi-disk (16) has a continuous, constant multi-disk thickness (35).

13. Multi-disk coupling (10) according to one of claims 1 to 12, **characterised in that** a tensile load-bearing section (63) of the multi-disk (16) is embodied between two adjacent second fastening means (19), which with respect to a connecting line (60) is embodied in symmetry between the two adjacent fastening means (10).

14. Industrial application (50), comprising a drive unit (52), which is connected by way of a coupling (54) in a torque-transmitting manner with an output unit (56), **characterised in that** the coupling (54) is embodied as a multi-disk coupling (10) according to one of claims 1 to 13.

**Revendications**

1. Embrayage (10) à disques multiples, comprenant une première et une deuxième bride (12, 14), qui sont reliées entre elles à transmission de couple par l'intermédiaire d'un disque (16), et le disque (16) est relié à la première bride (12) par l'intermédiaire d'un premier moyen (17) de fixation, qui est relié de manière amovible à un deuxième moyen (19) de fixation, dans lequel le deuxième moyen (19) de fixation est relié au disque (16) par une liaison (23) à coopération de matière, **caractérisé en ce que** le disque (16) est constitué sans évidement au moins dans la partie du deuxième moyen (19) de fixation.

2. Embrayage (10) à disques multiples suivant la revendication 1, **caractérisé en ce que** le premier moyen (17) de fixation est constitué sous la forme d'un vis, d'un boulon, d'un boulon fileté ou d'un boulon ajusté et/ou **en ce que** le deuxième moyen (19) de fixation est constitué sous la forme d'un écrou ou d'un écrou à souder.

3. Embrayage (10) à disques multiples suivant la revendication 1 ou 2, **caractérisé en ce que** la liaison (23) à coopération de matière est constituée sous la forme d'une soudure, d'une brasure, d'une brasure forte ou d'un collage.

4. Embrayage (10) à disques multiples suivant la revendication 3, **caractérisé en ce que** la liaison (23) à coopération de matière est produite par soudure par un faisceau d'électrons ou par soudure laser.

5. Embrayage (10) à disques multiples suivant l'une des revendications 1 à 4, **caractérisé en ce que** la deuxième bride (14) est reliée de manière amovible, par l'intermédiaire d'un premier moyen (17) de fixation, au disque (16), qui est relié au deuxième moyen (19) de fixation relié au disque (16) par une liaison (13) à coopération de matière.

6. Embrayage (10) à disques multiples suivant la revendication 5, **caractérisé en ce qu'**une distance entre deux deuxièmes moyens (19) de fixation voisins, qui sont reliés chacun à coopération de matière au disque (16), correspond à une longueur (38) libre de disque.

7. Embrayage (10) à disques multiples suivant l'une des revendication 1 à 6, **caractérisé en ce que** un élément (28) d'entretoisement est disposé entre le deuxième moyen (19) de fixation et le disque (16) et la liaison (23) à coopération de matière est constituée entre le disque (16) et l'élément (28) d'entretoisement.

8. Embrayage (10) à disques multiples suivant l'une des revendication 1 à 6, **caractérisé en ce que** la liaison (23) à coopération de matière est constituée directement entre le premier moyen (17) de fixation et le disque (16).

9. Embrayage (10) à disques multiples suivant l'une des revendications 1 à 8, **caractérisé en ce que** l'embrayage (10) à disques multiples a une puissance volumique spécifique à la surface de 100 MW/m$^2$ à 400 MW/m$^2$, de préférence de 150 MW/m$^2$ à 350 MW/m$^2$, d'une manière encore plus préférée de 160 MW/m$^2$ à 280 MW/m$^2$.

10. Embrayage (10) à disques multiples suivant l'une des revendications 1 à 8, **caractérisé en ce que** le premier moyen (17) de fixation est constitué à la première et/ou à la deuxième bride (12, 14) pour l'absorption d'une force (48) transversale.

11. Embrayage (10) à disques multiples suivant l'une des revendications 1 à 10, **caractérisé en ce qu'**une largeur (32) radiale maximum du disque (16) correspond de 1,0 fois à 1,8 fois, de préférence de 1,0 fois à 1,5 fois, d'une particulièrement préférée de 1,0 fois à 1,2 fois, a une largeur (29) radiale minimum du disque (19).

12. Embrayage (10) à disques multiples suivant l'une des revendications 1 à 11, **caractérisé en ce que** le disque (16) a une épaisseur (35) d'une manière générale constante.

13. Embrayage (10) à disques multiples suivant l'une des revendications 1 à 12, **caractérisé en ce qu'**entre deux deuxièmes moyens (19) de fixation voisins, est constituée une partie (63) supportant une charge de traction du disque (16), qui est constituée de manière symétrique par rapport à une ligne (60) de liaison entre les deux moyens (19) de fixation voisins.

14. Application (50) industrielle, comprenant une unité (52) menante, qui est reliée à transmission de couple à une unité (56) menée par l'intermédiaire d'un embrayage (54), **caractérisée en ce que** l'embrayage (54) est constitué sous la forme d'un embrayage (10) à disques multiples suivant l'une des revendications 1 à 13.

# FIG 1

EP 3 647 618 B1

FIG 2

FIG 3

FIG 4

FIG 5

10,12,14

30

40

35

19,21    23

43

29,47

19,21    23

19,21

23

36

34

39

15

27

16

26

40

32,47

32

19,21    23

23    19,21

27

38

19,21    23

EP 3 647 618 B1

17

FIG 6

14  23  16  43

10,30

27

23

19,21

29,32,47

19,21

40

36

34

39

15

26

19,21

23

19,21  23

23  19,21

19,21

40

23

38

35

EP 3 647 618 B1

# FIG 7

# FIG 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3521648 A1
- GB 2222865 A
- JP 3755983 B
- EP 1347183 A1